# EUROPÄISCHE PATENTSCHRIFT

(11) **EP 1 454 073 B1**
(45) Veröffentlichungstag und Bekanntmachung des Hinweises auf die Patenterteilung: **24.01.2007**
(21) Anmeldenummer: 02795145.8
(22) Anmeldetag: 10.12.2002
(51) Int. Cl.: F16C 11/06

(54) **KUGELGELENK**
BALL JOINT
JOINT A ROTULE

(30) Priorität: 12.12.2001 DE 20120251 U
(43) Veröffentlichungstag der Anmeldung: 08.09.2004
(60) Teilanmeldung: 06008875.4
(73) Patentinhaber: TRW Automotive GmbH, 73553 Alfdorf (DE)
(72) Erfinder: HEEP, Theo, 47800 Krefeld (DE)
(74) Vertreter: Sties, Jochen
(86) Internationale Anmeldenummer: PCT/EP2002/014016
(87) Internationale Veröffentlichungsnummer: WO 2003/054400

(56) Entgegenhaltungen:
- EP-A- 0 607 610
- DE-C- 808 014
- FR-A- 1 153 763
- US-A- 3 284 115
- US-A- 3 613 201
- US-A- 4 256 413
- PATENT ABSTRACTS OF JAPAN vol. 1998, no. 06, 30. April 1998 (1998-04-30) & JP 10 037944 A (OTIX:KK), 13. Februar 1998 (1998-02-13) in der Anmeldung erwähnt

## Beschreibung

Die Erfindung betrifft ein Kugelgelenk nach dem Oberbegriff des Anspruchs 1.

Ein Kugelgelenk mit einem Kugelzapfen, einem von einer Wandung begrenzten Aufnahmeraum für den Kugelzapfen und einem Anschlußbauteil aus Blech, wobei die Wandung des Aufnahmeraumes einstückig mit dem Anschlußbauteil ausgeführt ist, ist aus der japanischen Patentanmeldung mit der Offenlegungsnurnmer 10-37944 (Anmeldenummer 08214384) bekannt. Das Anschlußbauteil ist hier ein tragendes Bauteil einer Fahrzeugaufhängung, beispielsweise ein Querlenker, und die Wandung des Aufnahmeraumes ist dadurch gebildet, daß das Anschlußbauteil napfartig umgebogen ist. Der vom Boden des Napfes abgewandte Rand der Wandung des Aufnahmeraumes wird radial nach innen umgebogen, nachdem in den Aufnahmeraum eine Lagerschale sowie der Kugelzapfen eingesetzt sind. Der Kugelzapfen ist dann fest in dem Aufnahmeraum gehalten.

Ein Kugelgelenk mit den Merkmalen des Oberbegriffs des Anspruchs 1 ist in der FR-A-1 153 763 gezeigt. Das Kugelgelenk weist einen von einer Wandung begrenzten Aufnahmeraum für einen Kugelzapfen auf, wobei die Wandung einstückig mit einem Anschlußbauteil ausgeführt ist. Der Aufnahmeraum hat zwei offene Enden, von denen eines durch eine Platte geschlossen ist.

Die Aufgabe der Erfindung besteht darin, ein Kugelgelenk der eingangs genannten Art dahingehend weiterzubilden, daß eine größere Variabilität möglich ist.

Zu diesem Zweck ist gemäß der Erfindung ein Kugelgelenk mit den Merkmalen des Anspruchs 1 vorgesehen. Die erfindungsgemäße Gestaltung ermöglicht, den Kugelzapfen sowohl in der einen als auch in der anderen Richtung aus der Aufnahme herausragen zu lassen. Auch ist es möglich, sehr unterschiedliche Deckel oder Lagerschalen im Inneren des Aufnahmeraumes anzuordnen. Schließlich ergeben sich Vorteile bei der Montage des Kugelzapfens im Aufnahmeraum. Im Stand der Technik nach der JP-A-10-37944 ist die Wandung des Aufnahmeraumes an der offenen Seite, also an der vom Boden des Aufnahmeraumes abgewandten Seite, doppellagig ausgeführt. Nach dem Einsetzen des Kugelzapfens in die Aufnahme muß notwendigerweise der doppellagige Teil der Wandung radial nach innen umgebogen werden, um den Aufnahmeraum so weit zu verschließen, daß der Kugelzapfen fest im Aufnahmeraum aufgenommen ist. Das Verformen der doppellagigen Wandung ist jedoch ein vergleichsweise schwer zu beherrschender Vorgang, da die im Inneren des Aufnahmeraumes angeordnete Lagerschale beim Umbiegen der Wandung nicht zerquetscht werden darf. Bei dem erfindungsgemäßen Kugelgelenk kann dagegen das doppellagige Ende des Aufnahmeraumes geeignet verformt werden, bevor der Kugelzapfen und die Lagerschale eingesetzt werden. Dann kann der Kugelzapfen von dem anderen, offenen Ende des Aufnahmeraumes montiert werden, und abschließend kann das einlagig ausgeführte Ende des Aufnahmeraumes verschlossen werden.

Vorteilhafte Ausgestaltungen der Erfindung ergeben sich aus den Unteransprüchen.

Die Erfindung wird nachfolgend anhand verschiedener Ausführungsformen beschrieben, die in den beigefügten Zeichnungen dargestellt sind. In diesen zeigen:
- Figur 1 ein Anschlußbauteil mit Aufnahmeraum für den Kugelzapfen in einem ersten Zwischenschritt während der Herstellung;
- Figur 2 das Anschlußbauteil von Figur 1 in einem weiteren Zwischenschritt;
- Figur 3 in einer Schnittansicht eine Ausführungsform eines nicht erfindungsgemäßen Kugelgelenks, wobei rechts und links der Mittellinie unterschiedliche Varianten gezeigt sind; und
- Figur 4 in einer Schnittansicht weitere Ausführungsformen eines Kugelgelenks, wobei rechts der Mittellinie eine nicht; erfindungsgemäße Ausführungsform und links der Mittellinie eine erfindungsgemäße Ausführungsform gezeigt ist.

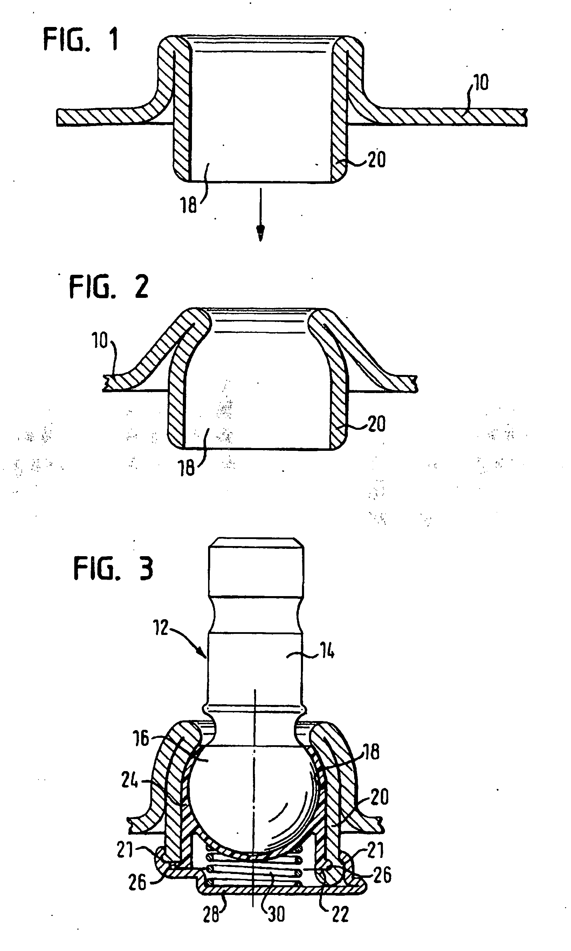

In Figur 1 ist ein Anschlußbauteil 10 gezeigt, das aus Blech besteht und beispielsweise ein Querlenker eines Radaufhängungssystems für ein Kraftfahrzeug ist. Am Anschlußbauteil 10 soll ein Kugelgelenk vorgesehen sein, das im wesentlichen aus einem Kugelzapfen 12 (siehe Figur 3) mit einem Anschlußbolzen 14 und einem Kugelkopf 16 besteht, der in einem Aufnahmeraum 18 angeordnet ist. Der Aufnahmeraum ist begrenzt von einer Wandung 20, die einstückig mit dem Anschlußbauteil 10 ausgebildet ist. Zu diesem Zweck wird an der Stelle des Anschlußbauteils, an dem das Kugelgelenk anzuordnen ist, zunächst das Material des Anschlußbauteils 10 durch einen Stülpprozeß in eine topf- oder napfähnliche Struktur umgeformt, die sich zu beiden Seiten der Blechebene erstreckt. Dann wird der Boden des so entstandenen Topfes ausgestanzt, so daß eine rohrförmige Wandung 20 erhalten wird. Dieser Zustand ist in Figur 1 gezeigt. Die Wandung 20 definiert den Aufnahmeraum 18, der somit an beiden axialen Enden offen ist. Die Wandung 20 ist in dem Bereich, der oberhalb der vom Blech des Anschlußbauteils 10 definierten Ebene liegt, zweilagig ausgeführt, während der unterhalb dieser Ebene liegende Abschnitt der Wandung 20 einlagig ausgeführt ist.

Nach dem Ausstanzen des Bodens wird das axiale Ende der Wandung 20, an dem diese zweilagig ausgebildet ist, radial einwärts verformt, so daß die in Figur 2 gezeigte Gestalt der Wandung 20 erhalten wird. Die Wandung kann vergleichsweise problemlos verformt werden, da ein geeigneter Gegenhalter in das Innere des Aufnahmeraumes 18 eingebracht werden kann. Am entgegengesetzten axialen Ende der Wandung 20, also am einlagig ausgeführten Ende, wird die Wandung so verformt, daß ein radialer, umlaufender Absatz 21 gebildet ist. Dieser ist bei der in Figur 3 links der Mittellinie gezeigten Variante als vorstehender Kragen ausgebildet, während er bei der rechts der Mittellinie gezeigten Variante an der Rückseite eines Wulstes gebildet ist. Zusätzlich ist auf der Innenseite des Wulstes eine umlaufende Nut 22 vorgesehen.

Anschließend wird auf dem Kugelkopf 16 des Kugelzapfens 12 eine Lagerschale 24 montiert, und der Kugelzapfen 12 wird zusammen mit der Lagerschale 24 in den Aufnahmeraum 18 eingesetzt. Die Lagerschale 24 ist an ihrem vom Anschlußbolzen 14 abgewandten Ende mit einem radial vorstehenden Kragen 26 versehen, der bei der in Figur 3 links der Mittellinie gezeigten Variante auf der Stirnseite der Wandung 20 anliegt, während er bei der rechts der Mittellinie gezeigten Variante in die Nut 22 eingreift. Bei beiden Varianten ist die Lagerschale 24 auf diese Weise in axialer Richtung fixiert. Abschließend wird ein Deckel 28 angebracht, der den Aufnahmeraum 18 verschließt, wobei zwischen dem Deckel 28 und der Lagerschale 24 noch eine Druckfeder 30 eingesetzt wird. Der Deckel 28 wird bei der in Figur 3 rechts der Mittellinie gezeigten Variante an der Wandung 20 dadurch befestigt, daß er hinter dem Absatz 21 verstemmt wird. Bei der in Figur 3 links der Mittellinie gezeigten Variante wird der Deckel 28 mit der Wandung verschweißt.

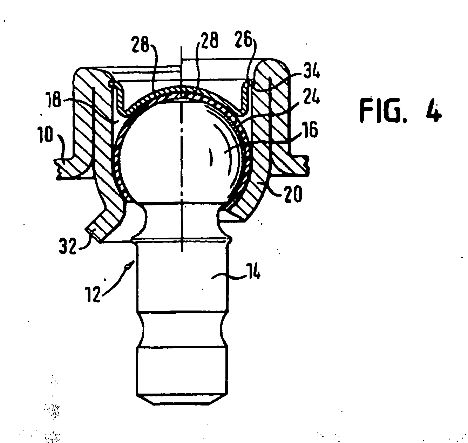

In Figur 4 sind zwei weitere Ausführungsformen eines Kugelgelenks gezeigt. Für die von der ersten Ausführungsform bekannten Bauteile werden dieselben Bezugszeichen verwendet, und es wird auf die obigen Erläuterungen verwiesen.

Im Unterschied zur ersten Ausführungsform ist bei den Ausführungsformen der Figur 4 der Kugelzapfen 12 so eingesetzt, daß der Anschlußbolzen 14 durch das einlagig ausgeführte Ende der Wandung 20 hervorsteht. Dieses Ende ist geeignet nach innen gebogen, so daß der Kugelkopf 16 sicher im Aufnahmeraum 18 gehalten ist. Bei der links der Mittellinie gezeigten erfindungsgemäßen Ausführungsform ist das freie Ende form der Wandung 20 mit einer Schürze 32 versehen, die radial nach außen abgebogen ist. An der Schürze 32 kann ein Dichtungsbalg befestigt werden.

Am anderen axialen Ende der Wandung 20 ist ein innenliegender Absatz 34 vorgesehen, an dem der Kragen 26 des Deckels 28 anliegt (siehe die Darstellung rechts der Mittellinie). Nach dem Einsetzen des Deckels 28 wird das axiale Ende der doppellagigen Wandung 20 umgeformt, so daß der Kragen 26 des Deckels 28 nach Art einer Bördelung fest eingeklemmt wird (siehe die Darstellung links der Mittellinie). Das Kugelgelenk ist nun vollständig verschlossen.

## Patentansprüche

1. Kugelgelenk mit einem einen Kugelkopf (16) und einen Anschlußbolzen (14) aufweisenden Kugelzapfen (12), einem von einer Wandung (20) begrenzten Aufnahmeraum (18) für den Kugelzapfen (12) und einem Anschlußbauteil (10) aus Blech, wobei die Wandung (20) des Aufnahmeraumes (18) einstückig mit dem Anschlußbauteil (10) ausgeführt ist und der Aufnahmeraum (18) allgemein zylindrisch und in axialer Richtung beidseitig offen ist, **dadurch gekennzeichnet, daß** ein dem Anschlußbolzen (14) zugewandtes freies Ende der Wandung (20) mit einer Schürze (32) versehen ist, die radial nach außen abgebogen ist.

2. Kugelgelenk nach Anspruch 1, **dadurch gekennzeichnet, daß** die Wandung (20) abschnittsweise zweilagig ausgeführt ist.

3. Kugelgelenk nach Anspruch 2, **dadurch gekennzeichnet, daß** die Wandung (20) erhalten ist durch plastisches Verformen derart, daß ein Napf gebildet ist, und anschließendes Ausstanzen des Bodens des Napfes.

4. Kugelgelenk nach Anspruch 2 oder Anspruch 3, **dadurch gekennzeichnet, daß** der Kugelzapfen (12) einen Anschlußbolzen (14) aufweist und der Anschlußbolzen durch das Ende des Aufnahmeraumes (18) nach außen ragt, an dem die Wandung (20) des Aufnahmeraumes einlagig ausgeführt ist.

5. Kugelgelenk nach einem der vorhergehenden Ansprüche, **dadurch gekennzeichnet, daß** die Wandung (20) des Aufnahmeraumes (18) an einem axialen Ende mit einem Absatz (34) versehen ist, an dem ein Halteelement (28) für den Kugelzapfen anliegt.

6. Kugelgelenk nach einem der vorhergehenden Ansprüche, **dadurch gekennzeichnet, daß** die Wandung (20) des Aufnahmeraumes (18) an einem axialen Ende umgebördelt ist, so daß ein Halteelement an der Wandung des Aufnahmeraumes befestigt ist.

7. Kugelgelenk nach einem der vorhergehenden Ansprüche, **dadurch gekennzeichnet, daß** an der Schürze (32) ein Dichtungsbalg befestigt ist.

## Claims

1. A ball joint comprising a ball stud (12) having a ball head (16) and a connecting bolt (14), a receiving space (18) for the ball stud (12) and delimited by a wall (20), and a connection component (10) of sheet metal, the wall (20) of the receiving space (18) being constructed in one piece with the connection component (10), and the receiving space (18) being generally cylindrical and open on both sides in the axial direction, **characterized in that** a free end of the wall (20) facing the connecting bolt (14) is provided with a skirt (32) which is bent radially outwards.

2. The ball joint according to Claim 1, **characterized in that** the wall (20) is partially constructed so as to have two layers.

3. The ball joint according to Claim 2, **characterized in that** the wall (20) is obtained by plastic deformation such that a cup is formed, and subsequent punching out of the base of the cup.

4. The ball joint according to Claim 2 or Claim 3, **characterized in that** the ball stud (12) has a connecting bolt (14) and the connecting bolt projects outwards through that end of the receiving space (18) at which the wall (20) of the receiving space is constructed so as to have a single layer.

5. The ball joint according to any of the preceding claims, **characterized in that** at an axial end the wall (20) of the receiving space (18) is provided with a shoulder (34) against which a holding element (28) for the ball stud lies.

6. The ball joint according to any of the preceding claims, **characterized in that** the wall (20) of the receiving space (18) is flanged at an axial end, so that a holding element is fastened to the wall of the receiving space.

7. The ball joint according to any of the preceding claims, **characterized in that** a sealing bellows is fastened to the skirt (32).

## Revendications

1. Joint sphérique avec un pivot sphérique (12) présentant une tête sphérique (16) et un boulon de raccord (14), un espace de réception (18) limité par une paroi (20) pour le pivot sphérique (12), et un composant de raccord (10) en tôle, la paroi (20) de l'espace de réception (18) étant réalisée d'un seul tenant avec le composant de raccord (10), et l'espace de réception (18) étant en général cylindrique et ouvert des deux côtés en direction axiale, **caractérisé en ce qu'**une extrémité libre, tournée vers le boulon de raccord (14), de la paroi (20), est pourvue d'une jupe (32) qui est pliée radialement vers l'extérieur.

2. Joint sphérique selon la revendication 1, **caractérisé en ce que** la paroi (20) est réalisée par tronçons en deux couches.

3. Joint sphérique selon la revendication 2, **caractérisé en ce que** la paroi (20) est obtenue par déformation plastique, de manière à former un godet, et par matriçage consécutif du fond du godet.

4. Joint sphérique selon la revendication 2 ou la revendication 3, **caractérisé en ce que** le pivot sphérique (12) présente un boulon de raccord (14) et le boulon de raccord fait saillie vers l'extérieur à travers l'extrémité de l'espace de réception (18) au niveau de laquelle la paroi (20) de l'espace de réception est réalisée en une couche.

5. Joint sphérique selon l'une des revendications précédentes, **caractérisé en ce qu'**à une extrémité axiale, la paroi (20) de l'espace de réception (18) est pourvue d'un talon (34) sur lequel est en appui un élément de retenue (28) pour le pivot sphérique.

6. Joint sphérique selon l'une des revendications précédentes, **caractérisé en ce que** la paroi (20) de l'espace de réception (18) est rabattue à une extrémité axiale, de telle sorte qu'un élément de retenue est fixé sur la paroi de l'espace de réception.

7. Joint sphérique selon l'une des revendications précédentes, **caractérisé en ce qu'**un soufflet d'étanchéité est fixé sur la jupe (32).
